# EUROPÄISCHE PATENTSCHRIFT

(11) **EP 2 770 235 B1**
(45) Veröffentlichungstag und Bekanntmachung des Hinweises auf die Patenterteilung: **20.04.2016**
(21) Anmeldenummer: 14000651.1
(22) Anmeldetag: 24.02.2014
(51) Int. Cl.: F16K 1/38, F16K 1/08, F16K 1/42, F16K 27/02

(54) **Absperrarmatur**
Shut-off valve
Appareil de sectionnement

(30) Priorität: 22.02.2013 DE 202013001743 U
(43) Veröffentlichungstag der Anmeldung: 27.08.2014
(73) Patentinhaber: Gebr. Kemper GmbH + Co. KG Metallwerke, 57462 Olpe (DE)
(72) Erfinder: Tinkloh, Thomas, 57462 Olpe (DE)
(74) Vertreter: Grünecker Patent- und Rechtsanwälte PartG mbB

(56) Entgegenhaltungen:
- EP-A1- 0 438 688
- DE-C- 259 264
- FR-A- 831 058
- US-A- 2 891 763

## Beschreibung

Die vorliegende Erfindung betrifft eine Absperrarmatur mit einem Gehäuse, das eine Einlass- und eine Auslassöffnung ausbildet. In dem Gehäuse ist ein Ventilkörper senkrecht zu einer Längserstreckung des Gehäuses stellbar angeordnet. Das Gehäuse weist weiterhin eine Trennwand auf, die eine Ausnehmung ausbildet. Die Ausnehmung ist begrenzt von einem Ventilsitz, an den der Ventilkörper in einer Schließstellung dichtend anlegbar ist. Der Ventilkörper ist des Weiteren senkrecht zu der Längserstreckungsrichtung, d.h. senkrecht zu der Hauptströmungsrichtung des Gehäuses in eine Offenstellung stellbar.

Dabei wird bei der vorliegenden Erfindung davon ausgegangen, dass die Hauptströmungsrichtung insbesondere gebildet wird durch zwei Stutzen des Gehäuses, die üblicherweise dem Anschluss von Rohrleitungen dienen und die hierfür üblicherweise ein Innen- oder eine Außengewinde aufweisen können. Die Stutzen sind üblicherweise exakt fluchtend zueinander vorgesehen. Diese Ausgestaltung gilt für den Stand der Technik. Sie kann in gleicher Weise auch für die vorliegende Erfindung gelten.

Im Stand der Technik ist die Trennwand üblicherweise so ausgebildet, dass der Ventilsitz durch eine Ringfläche gebildet ist, die durch die Trennwand ausgeformt wird und welche sich rechtwinklig zu der Bewegungsrichtung des Ventilkörpers erstreckt. Dieser Ventilkörper hat üblicherweise eine gummielastische Ringscheibe, die gegen den Ventilsitz angelegt wird. Aufgrund dieser Ausgestaltung muss die Strömung durch das Gehäuse in Hauptströmungsrichtung umgelenkt werden, und zwar in einer Richtung rechtwinklig zu der Längserstreckung des Gehäuses, da sie die von dem Ventilsitz umgebene Öffnung üblicherweise bei einer vereinfachten Sicht in Bewegungsrichtung des Ventilkörpers durchströmt. Die Trennwand ragt dementsprechend zumindest einseitig weit in Bewegungsrichtung des Ventilkörpers in das Gehäuse hinein und verlegt denjenigen Weg, den die Strömung bei geringem Strömungsverlust nehmen würde, d.h. den geradlinigen Weg durch das Gehäuse.

Im Stand der Technik sind auch solche Armaturen zu finden, deren Ventilsitz nicht rechtwinklig zur Längserstreckungsrichtung angeordnet ist, wohl aber senkrecht zur Bewegungsrichtung des Ventilkörpers. Solche Armaturen sind aber nicht zur Montage unter Putz geeignet.

Aus der DE 39 01 695 A1 ist ein Hubventil bekannt, welches einen im Querschnitt im Grunde sichelförmigen Ventilkörper aufweist, der an nach hinten gegenüber dem Hauptströmungsdurchgang durch das Ventil vorgesehenen Dichtflächen anliegt und welcher ein gutes Verhältnis zwischen Durchströmungsquerschnitt auf Höhe des Ventils und Sitzquerschnitt bieten soll. Die spezielle Ausgestaltung des Ventilkörpers macht indes eine genaue Ausrichtung des Ventilkörpers bei der Montage erforderlich. Anderenfalls können Undichtigkeiten auftreten. Ein ähnliches Problem geht mit dem aus der EP 0 239 009 A2 und dem aus der DE 546 464 A bekannten Hubventil einher.

Entsprechendes gilt für das aus der US 2 891 763 A bekannte Ventil. Bei diesem besteht zusätzlich das Problem, dass innerhalb des Ventilgehäuses die Strömung erheblich umgelenkt wird, um eine ringförmige und zumindest schräg zu der Stellachse des Ventils gerichtete Ventilfläche auszubilden, an welche das Ventil endseitig aufgesetzt wird.

Die DE 259 264 A sowie die DE 20 48 580 A offenbaren jeweils kegelstumpfförmige Ventilkörper, die an eine sich diagonal zu der Hauptströmungsrichtung innerhalb des Ventilkörpers erstreckenden Ventilsitz zur Anlage gelangen. Dieser Ventilsitz durchsetzt als schräg verlaufende Trennwand mit Bohrung den Ventilkörper. Die aus diesen beiden Druckschriften bekannten Lösungen verursachen jeweils einen nicht unerheblichen Druckverlust bei einer Strömung durch das geöffnete Ventil.

Der vorliegenden Erfindung liegt das Problem zugrunde, eine Absperrarmatur zu schaffen, die eine Durchströmung des Gehäuses mit geringerem Strömungswiderstand erlaubt und gleichzeitig für eine Montage unter Putz geeignet ist.

Zur Lösung dieses Problems wird mit der vorliegenden Erfindung eine Absperrarmatur mit den Merkmalen von Anspruch 1 angegeben.

Diese unterscheidet sich von dem zuvor diskutierten Stand der Technik dadurch, dass der Ventilsitz in Längserstreckungsrichtung des Gehäuses einen Höhenversatz aufweist, so dass die Ausnehmung in Längserstreckungsrichtung des Gehäuses offen ist.

Das Gehäuse ist insbesondere als Unterputzgehäuse ausgelegt. Das bedeutet, dass das Gehäuse üblicherweise so ausgebildet ist, dass ein Schaft im Wesentlichen fluiddicht mit dem Gehäuse verbunden, vorzugsweise aufgeschraubt werden kann. Dieser Schaft umgibt üblicherweise eine Welle, über welche der Ventilkörper stellbar ist und bewirkt, dass im Falle einer Undichtigkeit Wasser durch den Schaft nach außen in Richtung auf ein Bedienelement der Absperrarmatur geleitet wird und nicht unbemerkt in das Mauerwerk einsickern kann.

Die vorliegende Erfindung gibt ein Gehäuse an, welches ohne die zuvor beschriebene Umlenkung des Strömung auskommen kann. Bei dem erfindungsgemäßen Gehäuse hat der Ventilsitz in Längserstreckungsrichtung des Gehäuses einen Höhenversatz. Dementsprechend liegt die den Ventilsitz bildende Fläche nicht in einer einzigen Ebene, die in Hauptströmungsrichtung liegt, d.h. rechtwinklig zu der Bewegungsrichtung des Ventilkörpers. Vielmehr liegen die den Ventilsitz bildenden Flächen in Bewegungsrichtung des Ventilkörpers auf unterschiedlichen Ebenen. Dabei befindet sich die in Strömungsrichtung vorlaufend Kante der Trennwand üblicherweise über der in Strömungsrichtung nachlaufenden Kante der Trennwand, die jeweils zur Ausbildung des Ventilsitzes beitragen, indes bei der Erfindung in Höhenrichtung, d.h. Bewegungsrichtung des Ventilkörpers einen Abstand zueinander haben, so dass die zwischen der vorlaufenden und der nachlaufenden Kante ausgebildete Ausnehmung in Längserstreckungsrichtung des Gehäuses offen ist.

Somit muss die Strömung beim Durchfluss durch das Gehäuse nicht zwingend umgelenkt werden. Ein Blick durch die eventuell vorgesehenen, fluchtend zueinander angeordneten Stutzen erlaubt bei der erfindungsgemäßen Ausgestaltung der Armatur ein direktes Hindurchschauen durch das Gehäuse und durch die Ausnehmung. Idealerweise liegen die Projektionen der Einlass- und Auslassöffnung bei der erfindungsgemäßen Absperrarmatur übereinander, wobei die Ausnehmung innerhalb dieser Projektionsfläche liegt.

Gleichwohl ist bei der Verwirklichung der erfindungsgemäßen Absperrarmatur nicht ausgeschlossen, dass das Gehäuse Wandungen ausbildet, die eine gewisse Umlenkung der Strömung begünstigen, denn die Trennwand ragt üblicherweise zumindest ein Stück weit in Bewegungsrichtung des Ventilkörpers in das Gehäuse hinein. Dabei ist ein Hereinragen der Trennwand auf derjenigen Seite, an der sich der Ventilkörper in der Offenstellung befindet, im Wesentlichen unschädlich, soweit die Trennwand den Ventilkörper in Hauptströmungsrichtung in dieser Offenstellung lediglich abdeckt.

Gemäß der vorliegenden Erfindung bildet der Ventilsitz in Längserstreckung des Gehäuses einen Z-förmigen Höhenversatz aus. Diese Weiterbildung lässt sich von der Vorstellung leiten, dass der Ventilsitz im Grunde zwei halbkreisförmige Anlageflächen aufweist, die sich quer zu der Stellrichtung des Ventilkörpers erstrecken und die in Stellrichtung des Ventilkörpers einen Überlappungsbereich haben und dort über ein Mittelteil des Ventilsitzes verbunden sind, der sich überwiegend oder ausschließlich in Stellrichtung des Ventilkörpers erstreckt. Die halbkreisförmigen Anlageflächen sind dabei auf unterschiedlichen Längsschnittansichten durch das Gehäuse jeweils auf Höhe des Ventilsitzes zu erkennen. Diese Längsschnittansichten erstrecken sich quer zu der Stellrichtung des Ventilkörpers. Die zuvor diskutierte Ausgestaltung ist reiboptimiert ausgebildet, da der Ventilkörper lediglich an dem recht schmal ausgebildeten Mittelteil über die gesamte Höhe des Versatzes zur Anlage gebracht wird. Darüber hinaus erlaubt die Ausgestaltung eine sehr gute Verringerung des Strömungswiderstandes durch das Gehäuse.

Gemäß einer bevorzugten Weiterbildung der vorliegenden Erfindung weist der Ventilkörper eine Dichtfläche auf, die Bestandteil einer Außenfläche eines gedachten kegelförmigen Hüllkörpers ist. Mit anderen Worten liegt der Ventilkörper in der Schließstellung nicht an einer durch die Trennwand ausgebildeten Fläche an, die sich rechtwinklig zu der Bewegungsrichtung des Ventilkörpers erstreckt. Vielmehr hat der Ventilsitz, d.h. die Anlagefläche für den Ventilkörper eine erhebliche Erstreckung in der Stellrichtung des Ventilkörpers. Mit Blick auf eine solide Abdichtung bei Anlage des Ventilkörpers an den Ventilsitz erstreckt sich dieser sowohl in einer Richtung quer als auch parallel zur Stellrichtung des Ventilkörpers. Der Ventilsitz läuft dabei üblicherweise zum Innern des Gehäuses spitz zu, sodass die oberen, den Ventilsitz bildenden Flächen relativ weit quer zu der Bewegungsachse, d. h. Stellrichtung des Ventilkörpers zurückspringen und die Ausnehmung weit aufspannen.

Der Ventilkörper kann jede beliebige komplexe Ausgestaltung aufweisen, um mit einem Ventilsitz gemäß der vorliegenden Erfindung in der Schließstellung zusammen zu wirken, so dass sich eine dichtende Anlage ergibt und die Absperrarmatur verschlossen ist. Allerdings sind zur Verwirklichung der vorliegenden Erfindung rotationssymmetrische Querschnittsformen der Außenumfangsfläche zu bevorzugen. Als rotationssymmetrische Außenfläche in diesem Sinne ist auch eine Gestaltung anzusehen, bei welcher sämtliche außenumfänglich vorgesehenen Flächen, die nicht notwendigerweise in Umfangsrichtung geschlossen sein müssen, auf einer rotationssymmetrischen Hüllfläche liegen. Aus Gründen einer wirtschaftlichen Herstellung ist indes eine Ausgestaltung mit umfänglich geschlossener Außenumfangsfläche zu bevorzugen.

Relevant ist insofern vor allem ein Querschnitt, dessen Mittelpunkt der Bewegungsachse entspricht, wobei es nicht darauf ankommt, ob die innere Struktur des Ventilkörpers im Querschnitt rotationssymmetrisch ist. So wird gemäß einer bevorzugten Ausgestaltung der vorliegenden Erfindung vorgeschlagen, den Ventilkörper kegelstumpfförmig auszubilden. Eine solche Ausgestaltung verbessert nicht nur eine dichtende Anlage an dem Ventilsitz in der Schließstellung. Sie führt auch zu einem Ventilkörper, der sich von seinem freien Ende hin verjüngt, so dass das freie Ende im Strömungskanal des Gehäuses relativ wenig Platz einnimmt und der Ventilkörper sich nach hinten verbreitert, dort indes wandnah angeordnet ist, und zwar üblicherweise nahe zu einer Wand, die sich rechtwinklig zu der Einlass- bzw. Auslassöffnung erstreckt und dementsprechend ohnehin den Strömungsweg begrenzt. So erlaubt die Ausgestaltung des Ventilkörpers einen möglichst geringen Strömungsverlust beim Durchfließen der Absperrarmatur.

Gemäß einer bevorzugten Weiterbildung der vorliegenden Erfindung, die eine wirtschaftliche Herstellung der Absperrarmatur erlaubt, ist der Ventilkörper als Metallkörper ausgebildet, auf dem ein Elastomer aufgebracht, insbesondere aufgespritzt ist. Dieser Elastomer bildet die Gegenfläche für den durch die Trennwand ausgeformten Ventilsitz und erlaubt daher auf einfache Weise eine dichtende Anlage. Durch das Umspritzen ist eine sehr einfache und dauerhafte Verbindung zwischen dem Elastomermaterial und dem Metallkörper geschaffen.

Gemäß einer weiteren bevorzugten Ausgestaltung der vorliegenden Erfindung ist der Ventilkörper oberseitig durch einen Flansch begrenzt. Dieser Flansch ist üblicherweise aus dem Metallmaterial des Metallkörpers gebildet und kann in der Schließstellung gehäuseseitig zur Anlage gelangen, um eine übermäßige Stellung des Ventilkörpers über die Schließstellung hinaus durch formschlüssige Anlage zu verhindern. Dabei kann die Anlage auch unter Zwischenlage des elastomeren Materials des Ventilkörpers erfolgen, so dass selbst in der Schließstellung kein direkter Metall-Metall-Kontakt zwischen dem Ventilkörper und dem Gehäuse gegeben ist.

Gemäß einer bevorzugten Weiterbildung der vorliegenden Erfindung hat der Ventilsitz einen im Wesentlichen halbkreisförmigen oberen Einlaufabschnitt und einen im Wesentlichen halbkreisförmigen unteren Auslaufabschnitt. Der Einlaufabschnitt ist dabei üblicherweise in Strömungsrichtung dem eigentlichen Ventilkörper vorgelagert; der Auslaufabschnitt dem Ventilkörper nachgelagert. Der Einlaufabschnitt ist oben angeordnet, d.h. befindet sich in einer Offenstellung des Ventilkörpers in etwa auf Höhe bzw. benachbart zu dem Ventilkörper, wohingegen der untere Auslaufabschnitt gegenüberliegend vorgesehen ist. Die Einlauf- bzw. Auslaufabschnitte haben eine halbkreisförmige Kontur. Diese Kontur des Dichtsitzes ist an die Kontur des Ventilkörpers angepasst. Üblicherweise hat der Einlaufabschnitt eine überwiegend axiale Erstreckung in Bezug auf die Stellachse des Ventilkörpers. Im Falle eines kegelstumpfförmigen Ventilkörpers ist der obere und/oder untere. Einlaufabschnitt leicht konisch geneigt relativ zu der Stellachse des Ventilkörpers ausgebildet. Die beiden Einlaufabschnitte sind im Wesentlichen halbkreisförmig ausgeformt, d.h. erstrecken sich üblicherweise über einen Umfangswinkel von zwischen 160 und 200°.

Vorzugsweise erstreckt sich ein Mitteilteil zwischen dem Ein- und Auslaufabschnitt streng in axialer Richtung relativ zu der Stellachse des Ventilkörpers. Bei einer solchen Ausgestaltung umschließt jeder einzelne halbkreisförmige Einlaufabschnitt in etwa einen Umschlingungswinkel von 180°.

Mit Blick auf eine möglichst gleichmäßige Strömung innerhalb der Absperrarmatur wird gemäß einer weiteren bevorzugten Ausgestaltung der vorliegenden Erfindung vorgeschlagen, dass der Ventilkörper in seiner Offenstellung mit seiner freien unteren Stirnfläche im Wesentlichen bündig zu einem den oberen Einlaufabschnitt unterseitig begrenzenden Abschnitt der Trennwand vorgesehen ist. Die Trennwand geht dort üblicherweise in den halbkreisförmigen oberen Einlaufabschnitt über und stützt diesen ab.

Besonders bevorzugt ist in der Offenstellung die untere Stirnfläche des Ventilkörpers im Wesentlichen bündig zu einer sich im Wesentlichen parallel zu einer Haupterstreckungsrichtung, d.h. Längserstreckungsrichtung des Gehäuses erstreckenden Unterfläche, die den oberen Einlaufabschnitt unterseitig abschließt. Diese Ausgestaltung schließt allerdings nicht aus, dass der Ventilsitz auch weiter nach oben zurückgestellt wird, d.h. in seiner maximalen Offenstellung mit seiner unteren Stirnfläche wesentlich höher als die besagte Unterfläche liegt.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Längsschnittansicht des Ausführungsbeispiels in der Offenstellung;
- Fig. 2: das in Figur 1 gezeigte Ausführungsbeispiel in der Schließstellung mit einem auf das Gehäuse aufgeschraubten Schaft;
- Fig. 3: eine Längsschnittansicht des in den Figuren 1 und 2 gezeigten Ausführungsbeispiels in Explosionsdarstellung;
- Fig. 4: eine Schnittansicht entlang der Linie IV-IV gemäß der Darstellung in Figur 3; und
- Fig. 5: eine Schnittansicht entlang der Linie V-V gemäß der Darstellung in Figur 3 nur für das Gehäuse.

In der Zeichnung ist mit Bezugszeichen 2 ein Gehäuse eingezeichnet, welches durch zwei gegenüberliegende und miteinander fluchtende Stutzen 4 eine Einlassöffnung 6 und eine Auslassöffnung 8 ausbildet. In dem Gehäuse 2 ist ein Ventilkörper 10 beweglich gelagert. Dazu ist in einem gehäuseseitigen Kranz 12 ein Ventiloberteil 14 eingeschraubt und gegenüber dem Kranz 12 abgedichtet. Das Ventiloberteil 14 hat eine nicht steigende Spindel 16, die mit einem Schaftbereich 18 des Ventilkörpers 10 in Gewindeeingriff ist, wobei der Schaftbereich 18 verdrehsicher in einem Ventiloberteilgehäuse 20 geführt und gehalten und über O-Ringe 22 abgedichtet ist.

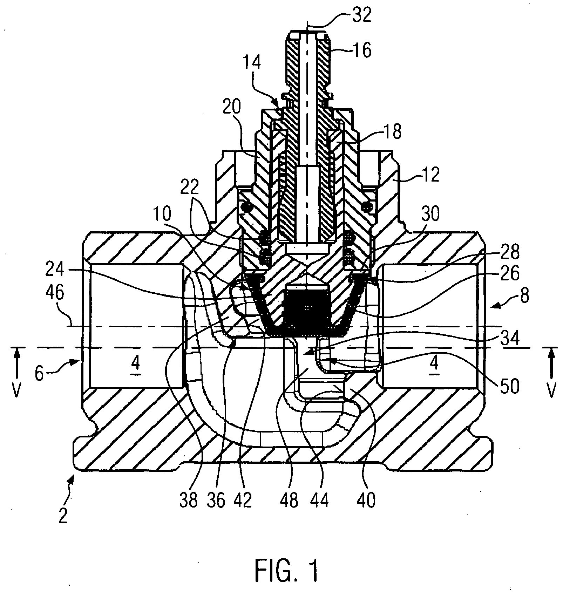

Der Ventilkörper 10 weist einen metallischen Kegelstumpf 24 auf, der zur Ausbildung eines Elastomermantels 26 mit einem mittels Umspritzen aufgebrachten Elastomermaterial versehen ist. Der metallische Kegelstumpf 24 bildet eine Ringnut 28 aus, welche von dem Elastomermantel 26 hintergriffen ist. Distal zu dieser Ringnut 28 formt der Ventilkörper 10 einen einheitlich mit dem metallischen Kegelstumpf 24 ausgebildeten Flansch 30 aus, der in der in Fig. 1 gezeigten Offenstellung stirnseitig an dem Ventiloberteilgehäuse 20 anliegt.

Konzentrisch zu einer Mittellängsachse 32 der Spindel 16 bildet das Gehäuse 2 einen Ventilsitz 34 aus. Der Ventilsitz 34 ist durch eine durch das Gehäuse 2 ausgebildete Trennwand 36 ausgeformt. Die Trennwand 36 umfasst einen Einlaufabschnitt 38, der gegenüber der Einlassöffnung 6 angeordnet ist, und einen Auslaufabschnitt 40, der gegenüber der Auslassöffnung 8 vorgesehen ist. Der Einlaufabschnitt 38 und der Auslaufabschnitt 40 bilden einander gegenüberliegende konisch ausgeformte halbkreisförmige Anlageflächen 42, 44 aus, die sich entlang einer Längserstreckungsrichtung 46 des Gehäuses 2 überdecken. Bei einer Draufsicht entlang der Mittellängsachse 32 durch den Kranz 12 liegt ein strömungsnahes Ende der halbkreisförmigen Anlagefläche 42 des Einlaufabschnittes 38 dementsprechend über dem strömungsfernen Ende der halbkreisförmigen Anlagefläche 44, die durch den Auslaufabschnitt 40 gebildet wird. Strömungsnah bedeutet hier verhältnismäßig nahe zu der Einlassöffnung 6; strömungsfern bedeutet relativ weit von der Einlassöffnung 6. Dabei ist die halbkreisförmige Anlagefläche 42 oben, d.h. nahe des Ventilkörpers 10 in seiner in Figur 1 gezeigten Offenstellung angeordnet, d.h. nahe des Ventiloberteils 14, wohingegen die halbkreisförmige Anlagefläche 44 gegenüberliegend dazu vorgesehen ist und dementsprechend "unten", d.h. auf der dem Ventiloberteil 14 gegenüberliegenden Seite des Gehäuses. Der die Anlagefläche 42 ausbildende Einlaufabschnitt 38 der Trennwand 36 kann dementsprechend auch als "oberer Einlaufabschnitt" bezeichnet werden, wohingegen der Auslaufabschnitt 40 auch als "unterer Auslaufabschnitt" bezeichnet werden kann.

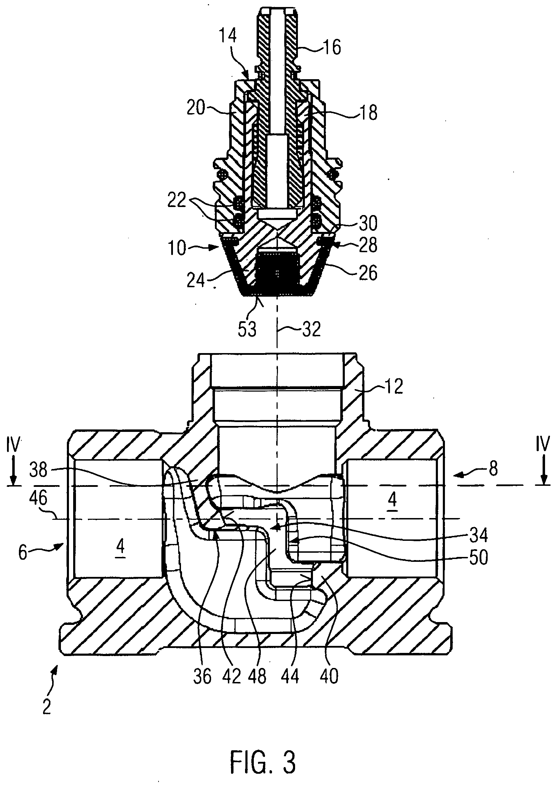

Die beiden sich in dieser Weise überdeckenden Flächenanteile der Anlageflächen 42, 44 sind über einen Mittelteil 48 miteinander verbunden, welches sich im Wesentlichen in der Erstreckungsrichtung der Mittellängsachse 32 erstreckt. Die halbkreisförmigen Anlageflächen 42, 44 und eine durch das Mittelteil 48 gebildete Fläche bilden den Ventilsitz 34 insgesamt aus (vgl. auch Fig. 3).

Die Konizität des Ventilsitzes 34 in Richtung der Mittellängsachse 32 ist dabei identisch zu der Konizität des kegelstumpfförmigen Ventilkörpers 10 ausgebildet. Mit anderen Worten liegen die durch die Anlageflächen 42, 44 und den Mittelteil 48 ausgeformten Flächenanteile des Ventilsitzes 34 auf einer Außenfläche eines gedachten, kegelförmigen Hüllkörpers. Der insofern gedachte kegelförmige Hüllkörper hat die gleiche Konizität wie der Ventilkörper 10.

Wie aus Fig. 1 ersichtlich wird durch diese Ausgestaltung der Anlageflächen 42, 44 und des Mittelteils 48 ein sich in Fig. 1 Z-förmig darstellender Höhenversatz gebildet. Die untere Kante des Einlaufabschnittes 38 liegt wesentlich höher als die obere Kante des Auslaufabschnittes 40, wobei "oben" und "unten" in Bezug auf die Bewegungsrichtung des Ventilkörpers 10 zu verstehen sind und "oben" näher an dem Ventilkörper 10 in seiner Schließstellung liegt. Hierdurch ergibt sich in der Projektion der Einlassöffnung 6 bzw. der Auslassöffnung 8 eine Ausnehmung 50. Die Ausnehmung 50 wird vorliegend durch die untere Kante des Einlaufabschnittes 38 und die obere Kante des Auslaufabschnittes 40 gebildet. Sie erlaubt eine direkte Durchströmung zwischen der Einlass- und der Auslassöffnung 8 ohne zwingende Umlenkung innerhalb des Gehäuses 2. Gleichwohl ist zu vermerken, dass vor allem unter dem Ventilsitz 34 eine muldenförmige Ausbildung, die durch eine Gussfläche des Gehäuses 2 gebildet wird, vorhanden ist, so dass die Strömung leichter die Ausnehmung 50 passieren kann.

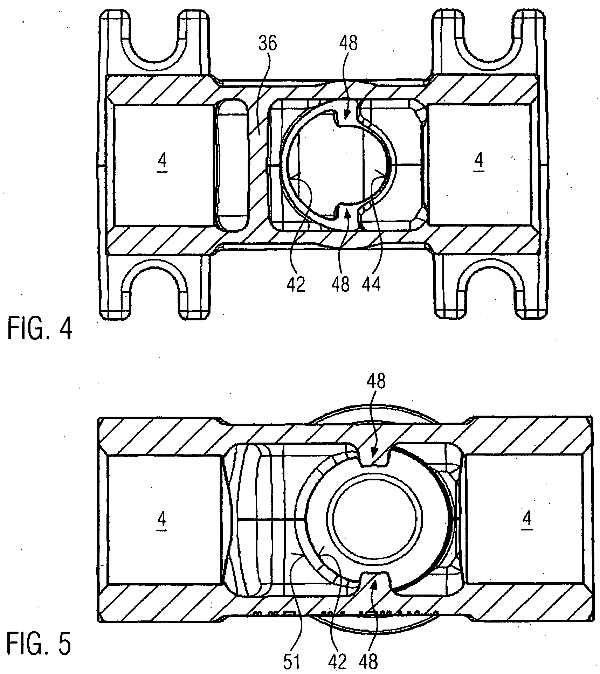

Wie insbesondere aus Figur 5 ersichtlich, erstreckt sich das Mitteilteil 48 der Trennwand 36 streng axial bezogen auf die Mittellängsachse 32, d.h. Bewegungsrichtung des Ventilkörpers 10. Wie des Weiteren Figur 4 verdeutlicht, hat die zunächst radial nach innen von der umfänglich den Stutzen 4 umgebenden Gehäusewandung abgehende Trennwand 36 einen geradlinigen Verlauf. Die Trennwand 36 durchsetzt gegenüberliegende Seitenwände des Gehäuses 2 rechtwinklig zu der Längserstreckungsrichtung 46. In der in Figur 1 gezeigten Offenstellung ist eine durch die Trennwand 36 gebildete Unterfläche 51 in etwa bündig mit einer unteren Stirnfläche 53 des Ventilkörpers 10. Hierdurch ergibt sich ein relativ gleichmäßiger Strom des Fluids (Wasser) durch die Absperrarmatur. Die höchste Strömungsgeschwindigkeit ergibt sich an dem gegenüberliegenden Ende zwischen dem dort vorgesehenen Rest der Trennwand 36, die dort die untere Anlagefläche 44 ausbildet.

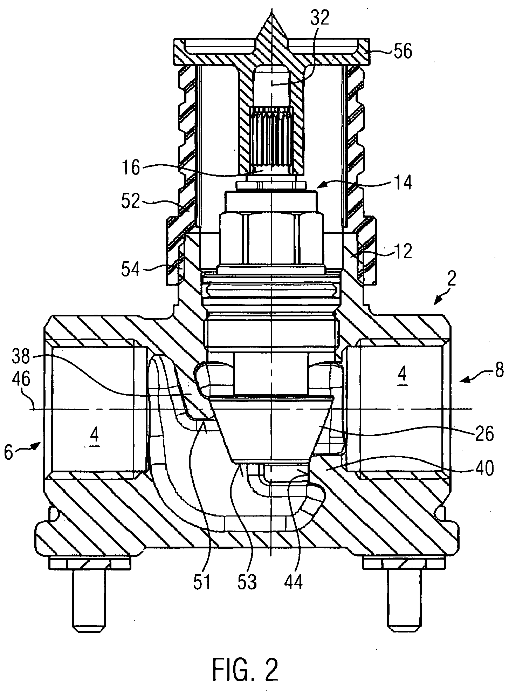

Figur 2 zeigt das zuvor diskutierte Ausführungsbeispiel in der Schließstellung. Durch Rotation der Spindel 16 ist der Ventilkörper 10 in eine distale Position verbracht worden. In dieser liegt der Ventilkörper 10 mit seinem vorderen, freien Ende an der halbkreisförmigen Anlagefläche 44 des Auslaufabschnittes 40 und mit seinem hinteren, nahe des Flansches 30 vorgesehenen Ende an der halbkreisförmigen Anlagefläche 42 des Einlaufabschnittes 38 an. Die Anlage erfolgt dabei jeweils unter Zwischenlage des Elastomermantels 26. Wie aus Figur 2 ersichtlicht, ist die axiale Überdeckung zwischen dem Ventilkörper 10 und der zugeordneten unteren Anlagefläche 44 gering. Der Ventilkörper 10 findet durch sein Anliegen gegen die untere Anlagefläche 44 seinen Anschlag in der in Figur 2 gezeigten Schließstellung.

Die durch das Mittelteil 48 gebildete Anlagefläche liegt in dieser Schließstellung bei im Wesentlichen axialer Erstreckung in Bezug auf die Mittellängsachse 32 an der kegelstumpfförmigen Mantelfläche des Elastomermantels 26 an. Auf diese Weise ist eine dichtende Anlage zwischen dem Ventilkörper 10 und der Trennwand 36 gegeben. Darüber hinaus liegt der Flansch 30 unter Zwischenlage des Elastomermantels 26 an der Trennwand 36 an und verhindert eine über die in Fig. 2 gezeigt Schließstellung hinausgehende Zustellbewegung des Ventilkörpers 10.

Figur 2 zeigt im Übrigen einen Schaft 52, der im Wesentlichen dichtend an dem Kranz 12 aufgeschraubt ist, der hierfür ein Außengewinde 54 aufweist. Der Schaft 52 erstreckt sich koaxial zu der Spindel 16 und umgibt diese. Auf die Spindel 16 ist endseitig ein Achsabschnitt einer Rosette 56 verdrehfest aufgebracht, die sich stirnseitig an den Schaft 52 anschließt.

Der Schaft 52 verhindert im Falle einer Undichtigkeit zwischen dem Ventiloberteil 14 und dem Gehäuse 2 ein Einsickern von austretendem Wasser in das Mauerwerk. Vielmehr bleibt das austretende Wasser innerhalb des Schaftes 52 und tritt außen an dem Schaft 52 aus, sodass eine Leckage der unter Putz montierten Absperrarmatur relativ rasch erkannt und ein unbemerktes Einsickern von Wasser in das Mauerwerk verhindert werden kann.

### Bezugszeichenliste

- 2: Gehäuse
- 4: Stutzen
- 6: Einlassöffnung
- 8: Auslassöffnung
- 10: Ventilkörper
- 12: Kranz
- 14: Ventiloberteil
- 16: Spindel
- 18: Schaftbereich
- 20: Ventiloberteilgehäuse
- 22: O-Ring
- 24: Metallischer Kegelstumpf
- 26: Elastomermantel
- 28: Ringnut
- 30: Flansch
- 32: Mittellängsachse
- 34: Ventilsitz
- 36: Trennwand
- 38: Einlaufabschnitt
- 40: Auslaufabschnitt
- 42: halbkreisförmige Anlagefläche des Einlaufabschnitts 38
- 44: halbkreisförmige Anlagefläche des Auslaufabschnitts 40
- 46: Längserstreckungsrichtung
- 48: Mittelteil
- 50: Ausnehmung
- 51: Unterfläche
- 52: Schaft
- 53: untere Stirnfläche
- 54: Außengewinde
- 56: Rosette

## Patentansprüche

1. Absperrarmatur mit einem Gehäuse (2), das eine Einlass- (6) und eine Auslassöffnung (8) ausbildet, in dem ein Ventilkörper (10) senkrecht zu einer Längserstreckungsrichtung (46) des Gehäuses (2) stellbar angeordnet ist und das eine mit einer Ausnehmung (50) versehene Trennwand (36) aufweist, die einen die Ausnehmung (50) begrenzenden Ventilsitz (34) ausbildet, an dem der Ventilkörper (10) in einer Schließstellung dichtend anliegt
**dadurch gekennzeichnet,**
**dass** der Ventilsitz (34) in Längserstreckungsrichtung (46) des Gehäuses (2) einen Z-förmigen Höhenversatz aufweist, so dass die Ausnehmung (50) in Längserstreckungsrichtung (46) des Gehäuses (2) offen ist.

2. Absperrarmatur nach Anspruch 1, **dadurch gekennzeichnet, dass** der Ventilsitz (34) eine Dichtfläche aufweist, welche Bestandteil einer Außenfläche eines gedachten kegelförmigen Hüllkörpers ist.

3. Absperrarmatur nach Anspruch 1 oder 2, **dadurch gekennzeichnet, dass** der Ventilkörper (10) eine rotationssymmetrische Außenfläche hat.

4. Absperrarmatur nach einem der vorherigen Ansprüche, **dadurch gekennzeichnet, dass** der Ventilkörper (10) kegelstumpfförmig ausgebildet ist.

5. Absperrarmatur nach einem der vorherigen Ansprüche, **dadurch gekennzeichnet, dass** der Ventilkörper (10) einen Metallkörper und einen Elastomermantel (26) umfasst.

6. Absperrarmatur nach einem der vorherigen Ansprüche, **dadurch gekennzeichnet, dass** der Ventilkörper (10) oberseitig durch einen Flansch (30) begrenzt ist.

7. Absperrarmatur nach einem der vorherigen Ansprüche, **dadurch gekennzeichnet, dass** der Ventilsitz (34) einen im Wesentlichen halbkreisförmigen oberen Einlaufabschnitt (38) und einen im Wesentlichen halbkreisförmigen unteren Auslaufabschnitt (40) aufweist, und dass die halbkreisförmigen Abschnitte (38, 40) jeweils eine radiale Abdichtung zu dem Ventilkörper bewirken.

8. Absperrarmatur nach Anspruch 7, **dadurch gekennzeichnet, dass** sich ein zwischen dem Einlauf- und Auslaufabschnitt (38, 40) vorgesehener Mittelteil (48) des Ventilsitzes (34) streng axial zu einer Stellachse des Ventilkörpers (10) erstreckt.

9. Absperrarmatur nach einem der vorherigen Ansprüche, **dadurch gekennzeichnet, dass** der Ventilkörper (10) in seiner Offenstellung mit seiner freien unteren Stirnfläche (53) im Wesentlichen bündig zu einem den oberen Einlaufabschnitt (38) unterseitig begrenzenden Abschnitt der Trennwand (36) vorgesehen ist.

## Claims

1. Shut-off valve having a housing (2) which realizes an inlet opening (6) and an outlet opening (8), in which housing a valve body (10) is arranged perpendicular to a longitudinal direction of extension (46) of the housing (2) so as to be adjustable and which comprises a partition wall (36), which is provided with a recess (50) and realizes a valve seat (34) which defines the recess (50), against which valve seat the valve body (10) abuts in a sealing manner in a closed position,
**characterized in that** the valve seat (34) comprises a Z-shaped height offset in the longitudinal direction of extension (46) of the housing (2) such that the recess (50) is open in the longitudinal direction of extension (46) of the housing (2).

2. Shut-off valve according to Claim 1, **characterized in that** the valve seat (34) comprises a sealing surface which is a component part of an outside surface of an imaginary cone-shaped casing body.

3. Shut-off valve according to Claim 1 or 2, **characterized in that** the valve body (10) has a rotationally symmetrical outside surface.

4. The shut-off valve according to one of the preceding claims, **characterized in that** the valve body (10) is realized in the manner of a truncated cone.

5. Shut-off valve according to one of the preceding claims, **characterized in that** the valve body (10) includes a metal body and an elastomer covering (26).

6. Shut-off valve according to one of the preceding claims, **characterized in that** the valve body (10) is defined at the top by a flange (30).

7. Shut-off valve according to one of the preceding claims, **characterized in that** the valve seat (34) comprises a substantially semicircular top inlet portion (38) and a substantially semicircular bottom outlet portion (40), and **in that** the semicircular portions (38, 40) each bring about radial sealing with regard to the valve body.

8. Shut-off valve according to Claim 7, **characterized in that** a central part (48) of the valve seat (34) which is provided between the inlet portion and the outlet portion (38, 40) extends strictly axially to an adjusting axis of the valve body (10).

9. Shut-off valve according to one of the preceding claims, **characterized in that** the valve body (10), in its open position, by way of its free bottom end face (53) is provided substantially flush to a portion of the partition wall (36) which defines the top inlet portion (38) at the bottom.

## Revendications

1. Robinet d'arrêt ou d'isolement avec un carter (2), qui forme une ouverture d'entrée (6) et une ouverture de sortie (8), dans lequel est agencé un corps d'obturation de soupape (10) réglable dans une direction perpendiculaire à une direction d'étendue longitudinale (46) du carter (2), et qui présente une paroi de séparation (36) pourvue d'un évidement (50) et formant un siège de soupape (34) délimitant l'évidement (50) et contre lequel s'appuie de manière étanche le corps d'obturation de soupape (10),
**caractérisé**
**en ce que** le siège de soupape (34) présente, dans la direction d'étendue longitudinale (46) du carter (2), un décalage de hauteur en forme de Z, de sorte que l'évidement (50) est ouvert dans la direction d'étendue longitudinale (46) du carter (2).

2. Robinet d'arrêt ou d'isolement selon la revendication 1, **caractérisé en ce que** le siège de soupape (34) présente une surface d'étanchéité, qui fait partie d'une surface extérieure d'un corps-enveloppe fictif de forme conique.

3. Robinet d'arrêt ou d'isolement selon la revendication 1 ou la revendication 2, **caractérisé en ce que** le corps d'obturation de soupape (10) a une surface extérieure à symétrie de rotation.

4. Robinet d'arrêt ou d'isolement selon l'une des revendications précédentes, **caractérisé en ce que** le corps d'obturation de soupape (10) est d'une configuration de forme tronconique.

5. Robinet d'arrêt ou d'isolement selon l'une des revendications précédentes, **caractérisé en ce que** le corps d'obturation de soupape (10) comprend un corps métallique et une enveloppe d'élastomère (26).

6. Robinet d'arrêt ou d'isolement selon l'une des revendications précédentes, **caractérisé en ce que** le corps d'obturation de soupape (10) est délimité, sur le côté supérieur, par un flasque (30).

7. Robinet d'arrêt ou d'isolement selon l'une des revendications précédentes, **caractérisé en ce que** le siège de soupape (34) présente un tronçon d'entrée supérieur (38) sensiblement en forme de demi-cercle, et un tronçon de sortie inférieur (40) sensiblement en forme de demi-cercle, et **en ce que** les tronçons (38, 40) en forme de demi-cercle produisent respectivement une étanchéité radiale par rapport au corps d'obturation de soupape.

8. Robinet d'arrêt ou d'isolement selon la revendication 7, **caractérisé en ce qu'**une partie centrale (48) du siège de soupape (34), prévue entre les tronçons d'entrée et de sortie (38, 40), s'étend de manière strictement axiale relativement à un axe de réglage du corps d'obturation de soupape (10).

9. Robinet d'arrêt ou d'isolement selon l'une des revendications précédentes, **caractérisé en ce que** le corps d'obturation de soupape (10), dans sa position d'ouverture, est prévu de manière à arriver, avec sa surface frontale inférieure (53), sensiblement au ras d'un tronçon de la paroi de séparation (36), qui délimite le tronçon d'entrée supérieur (38) sur son côté inférieur.
